Europäisches Patentamt

European Patent Office

Office européen des brevets

(11) Veröffentlichungsnummer: **0 253 300**
**B1**

(12) # EUROPÄISCHE PATENTSCHRIFT

(45) Veröffentlichungstag der Patentschrift:
22.11.90

(51) Int. Cl.⁵: **G06K 15/12, B41J 2/44**

(21) Anmeldenummer: 87109883.6

(22) Anmeldetag: 08.07.87

(54) **Thermo-Transfer-Druckeinrichtung.**

(30) Priorität: 11.07.86 DE 3623450

(43) Veröffentlichungstag der Anmeldung:
20.01.88 Patentblatt 88/3

(45) Bekanntmachung des Hinweises auf die Patenterteilung:
22.11.90 Patentblatt 90/47

(84) Benannte Vertragsstaaten:
AT CH DE FR GB IT LI NL SE

(56) Entgegenhaltungen:
EP-A- 0 048 595
EP-A- 0 177 093
DE-A- 3 411 847
GB-A- 2 017 590
US-A- 3 621 138
US-A- 3 854 808

(73) Patentinhaber: Siemens Aktiengesellschaft,
Wittelsbacherplatz 2, D-8000 München 2(DE)

(72) Erfinder: Mugrauer, Hubert, Dipl.-Ing., Parkstrasse 38,
D-8011 Pöring(DE)
Erfinder: Haass, Günther, Dr.-Ing., Staudingerstrasse 57,
D-8000 München 83(DE)

## Beschreibung

Die Erfindung bezieht sich auf eine Thermo-Transfer-Druckeinrichtung mit einem Druckkopf, der eine Vielzahl von in einem zweidimensionalen Feld angeordneten und durch die Druckinformation gesteuerten Schaltzellen aufweist. Über diese Schaltzellen wird die von einer Energiequelle abgegebene Energie parallel auf in einem Raster angeordnete Bildpunkte übertragen, die in der Ebene einer Farbstoffschichtseite eines bandförmigen Farbstoffträgers liegen, so daß bei ausreichend hoher lokaler Energieaufnahme der Farbstoff auf einen unter Druck anliegenden Druckträger übertragen wird.

In modernen Druckern, die vorzugsweise als periphere Geräte von Datenverarbeitungssystemen eingesetzt werden, werden zunehmend nichtmechanische Druckprinzipien realisiert. Dabei haben sich unter anderem auch Drucker, die nach dem elektrofotografischen Prinzip arbeiten, weithin durchgesetzt. Dieses Druckprinzip ist relativ kompliziert und damit auch kostspielig. Das ist darauf zurückzuführen, daß zunächst auf einer Ladungstrommel ein elektrostatisches Abbild eines Druckmusters erzeugt wird, um einen diesem Ladungsbild entsprechende Verteilung von Tonerteilchen herstellen zu können. Diese Tonerteilchen werden dann auf einen Druckträger vorzugsweise Papier im Einzelblatt- bzw. Endlosformat übertragen und dort fixiert. Wegen dieses relativ hohen technischen Aufwandes hat es daher nicht an Versuchen gefehlt, andere nichtmechanische Druckprinzipien einzuführen.

Eines der anderen an sich bekannten, wenn auch bisher weniger erfolgreichen nichtmechanischen Druckprinzipien ist das Prinzip des Thermo-Transfer-Druckes. Nach diesem Prinzip soll lokal, also in Mikropunkten nahe an bzw. auf die Oberfläche eines Druckträgers eine entsprechende Energiemenge gebracht werden, durch die die Erzeugung eines Bildpunktes ausgelöst wird. Dies kann z. B. dadurch geschehen, daß Spezialpapiere verwendet werden, die sich beim Auftreffen von Strahlungsenergie verfärben. Nachteilig ist hierbei zunächst die Verwendung eines Spezialpapieres, dann aber auch die damit einhergehende Beschränkung in der farblichen Erscheinung des Druckergebnisses. Darüber hinaus läßt bei bekannten Thermo-Transfer-Druckeinrichtungen, die mit derartigen Spezialpapieren arbeiten, auch die Druckqualität, d. h. die Schärfe der so erzeugten Abdruck zu wünschen übrig.

Wenn man das Prinzip des Thermo-Transfer-Drucks ohne Spezialpapiere realisieren will, müssen Farbstoffteilchen nach dem gewünschten Muster, ausgelöst durch lokale Zuführung von Energie, auf den Druckträger übertragen werden. Bekannte Lösungen für diese Ausführungsform des Thermo-Transfer-Druckprinzipes können nicht voll befriedigen, sie sind entweder hinsichtlich der Druckleistung und/oder auch der Druckqualität nicht voll befriedigend und daher z. B. im Wettbewerb mit den bekannten Druckern, die ein elektrofotografisches Druckprinzip verwirklichen, nicht konkurrenzfähig. Das beruht unter anderem darauf, daß es schwierig ist, eine ausreichend hohe Energiemenge für das Fixieren von Farbstoffteilchen in Bildpunkten eines Druckmusters zur Verfügung zu stellen und diese Energieübertragung auch noch mit einer entsprechend hohen Frequenz zu modulieren, die Voraussetzung für eine hohe Druckleistung, aber auch Druckqualität ist.

Daraus wird deutlich, daß bei Thermo-Transfer-Druckern zwei wesentliche Problembereiche bestehen: Der eine ist die Druckfarbe als solche und die Art ihrer Übertragung auf den Druckträger, denn dies bestimmt die notwendige Energiemenge. Der andere Problembereich ist der Druckkopf, d. h. also diejenige Einrichtung, mit der ein momentanes energetisches Abbild des gewünschten Druckmusters nahe der oder auf der Oberfläche des Druckträgers erzeugt wird. Bekannte Druckköpfe weisen beispielsweise beheizte Schreibelektroden auf, die mit dem Druckträger in Kontakt stehen. Problematisch ist hier die Verschleißfestigkeit, aber auch die thermische Trägheit der Druckelemente. Weiterhin ist bei konventionellen Lösungen nach dem Thermo-Transfer-Druckprinzip die benötigte Gesamtenergie zu hoch. Bekannte Lösungen für die Realisierung des an sich seit langem bekannten Thermo-Transfer-Druckprinzips sind daher bisher immer noch unbefriedigend und gegenüber anderen nichtmechanischen Druckprinzipien nicht ausreichend konkurrenzfähig, so daß sich solche Lösungen nicht durchgesetzt haben.

Der Erfindung liegt daher die Aufgabe zugrunde, eine Thermo-Transfer-Druckeinrichtung der eingangs genannten Art zu schaffen, die einen möglichst niedrigen Energiebedarf bei hoher Druckleistung und bei guter Druckqualität besitzt und damit den Einsatz des Thermo-Transfer-Druckprinzips wirtschaftlich ermöglicht.

Diese Aufgabe wird bei einer Thermo-Transfer-Druckeinrichtung der eingangs genannten Art erfindungsgemäß durch die im Kennzeichen des Patentanspruches 1 beschriebenen Merkmale gelöst.

Die erfindungsgemäße Lösung nutzt zum einen aus, daß Fortschritte vor allem in der Offset-Drucktechnik einen Farbstofftyp geschaffen haben, dessen spezielle Eigenschaften in anderer Weise als bei seinen konventionellen Anwendungsfällen gerade seine Verwendung auch als Farbstoff für den vorliegenden Fall geeignet erscheinen lassen. Dabei handelt es sich um eine thermoplastische Druckfarbe, die in der Drucktechnik auch als Cold-Set-bzw. Heiß-Carbon-Farbe bekannt ist. Diese Farbstoffe sind für den konventionellen Anwendungsfall so interessant, da sie zu den Schnelltrocken-Farben zählen. Sie bestehen aus Wachsen und wachsähnlichen Produkten, in denen bei der Herstellung in flüssigem Zustand Farbpigmente und Ruße feinst dispergiert werden. Wohl der bekannteste Anwendungsfall für diese Druckfarben sind Durchschreibeformularsätze, bei denen diese Druckfarbe früher verwendetes Kohlepapier ersetzt hat.

Für den vorliegenden Anwendungsfall ist das schnelle Trocknen dieser Farben zwar auch von Vorteil, denn es ermöglicht, einen umlaufenden Farbstoffträger vorzusehen, der kontinuierlich und simultan zum Druckvorgang ständig durch eine erneute Beschichtung vollständig regeneriert wird. Die Möglichkeit der Regeneration des Farbstoffträgers behebt einen der größten Mängel konventioneller Thermo-Transfer-Drucker, nämlich der bei ihnen bisher in Kauf genommenen hohen Farbstoffkosten. Bei der erfindungsgemäßen Lösung tritt praktisch kein Farbstoffverlust auf.

Von noch größerer Bedeutung jedoch ist die Tatsache, daß sich diese Druckfarben mit einem gegenüber anderen Farbstoffen wesentlichen geringeren Energieaufwand plastifizieren lassen, so daß sie auf einen Druckträger übertragen werden können. Der niedrige Energieverbrauch für die Umwandlung aus dem festen in den flüssigen Zustand der Druckfarbe aber ermöglicht es erst, als Druckkopf einen Zeichengenerator einzusetzen, der berührungslos rein optisch die notwendige Strahlungsenergie auf die Grenzschicht zwischen Farbstoffträger und dem Druckträger transportiert. Damit entfällt einer der wesentlichen Nachteile bekannter Thermo-Transfer-Druckwerke weg, nämlich der hohe Verschleiß des Druckkopfes.

Unter diesen Voraussetzungen ist es einerseits möglich, handelsübliche Strahlungsquellen zwar relativ hoher Leistung, von jedoch sehr kompaktem Aufbau, z. B. Xenon-Kurzbogenlampen zu verwenden. Dabei muß man sich verdeutlichen, daß ein derartiger Drucker, um konkurrenzfähig mit bereits auf dem Markt eingeführten Druckern zu sein, eine entsprechende Druckleistung bei hoher Druckqualität besitzen muß. Praktisch bedeutet dies, daß mit dem Zeichengenerator ein Bildpunktraster von bis zu mehreren 1000 Bildpunkten simultan erzeugt werden und die übertragene Energie ausreichend sein muß, um im Extremfall die Farbstoffschicht in allen diesen Bildpunkten lokal erschmelzen zu können. Trotz des niedrigen Schmelzpunktes der thermoplastischen Druckfarben zwischen 90° und 130° C müssen also in einem solchen optischen Zeichengenerator bei kurzen Schaltzeiten relativ hohe Energieströme mit einer hohen Frequenz ein- bzw. ausgeschaltet werden.

Bei der erfindungsgemäßen Lösung wird dies ermöglicht durch Schaltzellen des optischen Zeichengenerators, in denen ein optisches Schaltelement verwendet ist, das ursprünglich für Anwendungen in der Optoelektronik entwickelt wurde, sich jedoch auch im hier vorliegenden Anwendungsfall mit Vorteil einsetzen läßt. Die verwendete ferroelektrische Keramik ist in der Optoelektronik insbesondere als PLZT-Element bekannt. Es hat den Vorteil, daß es praktisch ohne Speichereffekt schaltbar ist. Durch Anlegen eines äußeren elektrischen Feldes ändert es seine Transmissionseigenschaften sowohl im Hinblick auf eine Drehung der Polarisationsebene als auch eine Streuung der transmittierten Strahlung.

Wie in Unteransprüchen beschriebene Weiterbildungen der Erfindung zeigen, lassen sich beide Effekte im vorliegenden Anwendungsfall ausnutzen, so daß mit diesem optischen Schaltelement eine Reihe von Gestaltungsmöglichkeiten zu Verfügung stehen, die eine flexible Anpassung an einen speziellen Anwendungsfall gestatten.

Dies wird unterstützt durch die Tatsache, daß infolge der Fortschritte auf dem Gebiet der Optoelektronik heute auch noch andere moderne optische Elemente zur Verfügung stehen, die sich mit Vorteil auch im vorliegenden Anwendungsfall einsetzen lassen. So wurden für Aufgaben auf dem Gebiet der Lichtübertragung beispielsweise Gradientenfasern entwickelt, die als Kollimatorlinsen oder auch als Abbildungsoptiken eingesetzt werden können. Wie in Unteransprüchen beschriebene Weiterbildungen der Erfindung zeigen, lassen sich Gradientenfasern im vorliegenden Fall mit Vorteil dafür verwenden, das mit Hilfe des beschriebenen optischen Schaltelementes zu schaltende Strahlenbündel zu spreizen, so daß die Strahlungsdichte innerhalb einer Schaltzelle erniedrigt wird und das Schaltproblem weniger kritisch ist. Dazu kommt weiterhin, daß sich ein vergrößerter Durchmesser des durch die Schaltzelle hindurchtretenden Strahlenbündels auch hinsichtlich der Toleranzen günstig auswirkt, da absolute Lageabweichungen der einzelnen Elemente einer Schaltzelle, also beispielsweise der Gradientenfasern und des optischen Schaltelementes, zueinander dann einen geringeren Einfluß auf Übertragungsverluste haben.

Insgesamt also ermöglicht die technische Lehre der Erfindung, ein Druckwerk nach dem Thermo-Transfer-Druckprinzip auszubilden, das mit einer verhältnismäßig niedrigen Energiemenge Druckergebnisse liefert, die durchaus mit denen anderer Druckprinzipien vergleichbar sind. Der Einsatz moderner optischer Elemente, sowohl hinsichtlich der Strahlungsquelle als auch der eigentlichen Elemente des Zeichengenerators, ermöglicht einen kompakten Aufbau mit einem berührungslosen "Druckkopf", dessen prinzipieller Aufbau hinsichtlich des einzelnen Kanales unter Verwendung handelsüblicher Produkte einfach, verschleißfest und kostengünstig ist.

Bei der Kompaktheit eines derartigen Druckwerkes sind nicht nur monochrome Lösungen möglich. Die bei anderen nichtmechanischen Druckprinzipien bereits gewonnenen Erfahrungen im Hinblick auf einen Mehrfarbendruck hoher Qualität, lassen sich auch hier verwerten, denn konstruktiv ist es ohne weiteres möglich, mehrere monochrome Druckwerke seriell hintereinander zu schalten und so eine Mehrfarben-Druckeinrichtung zu schaffen.

Andere Weiterbildungen der Erfindung, sowie Einzelheiten zu Ausführungsformen und deren Vorteile sind der nachfolgenden Beschreibung von Ausführungsbeispielen, die anhand der Zeichnung erfolgt, zu entnehmen. Dabei zeigt:

Fig. 1 eine Prinzipdarstellung des Druckwerkes eines Strahlungs-Thermo-Transfer-Druckers mit einem optischen Zeichengenerator,

Fig. 2 bis 4 in schematischer Darstellung jeweils eine Ausführungsform für eine Schaltzelle eines solchen Zeichengenerators,

Fig. 5 die schematische Darstellung eines zweidimensionalen Feldes von Schaltzellen, die den Zeichengenerator bilden und

Fig. 6 eine Ausführungsform eines Strahlungs-Thermo-Transfer-Druckers für farbigen Druck, bei dem eine Mehrzahl von Druckwerken gemäß Fig. 1 seriell hintereinander angeordnet ist, wobei jedes dieser Druckwerke selbst ein monochromes Druckergebnis liefert.

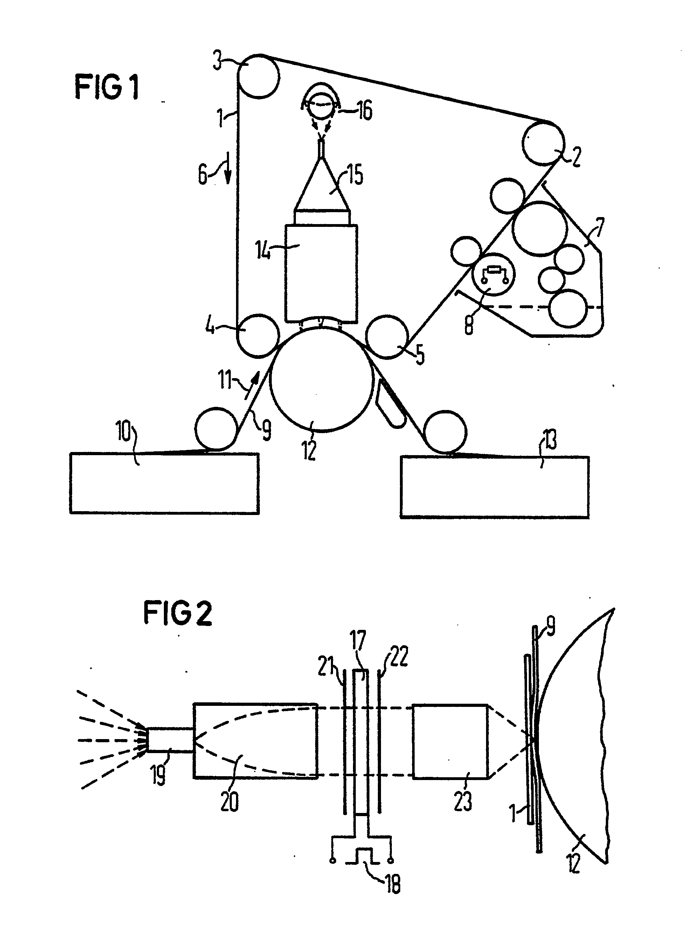

Bei dem in Fig. 1 dargestellten Druckwerk läuft ein endloser, bandförmiger Farbstoffträger 1, über Umlaufrollen 2 bis 5 transportiert, im Druckwerk um. Die Transportrichtung des Farbstoffträgers 1 ist durch einen Pfeil 6 angedeutet. Im Umlauf wird der Farbstoffträger 1 durch ein Farbwerk 7 gezogen. Im Farbwerk wird auf den bandförmigen Farbstoffträger 1 eine dünne Schicht von nur etwa 2 bis 5 µm Dicke einer thermoplastischen Druckfarbe aufgebracht. In der Buchdruck- bzw. der Offsetdrucktechnik sind die hier bei einem Thermo-Transfer-Drucker verwendeten Druckfarben als sogenannte Cold-set-Farben oder Heiß-Carbon-Farben bekannt. Sie zählen zu den Schnelltrocken-Farben, bestehen aus Wachsen oder wachsähnlichen Produkten, in die im noch flüssigem Zustand, Farbpigmente und Ruße feinst dispergiert werden. Eine derartige Farbmasse ist bei Raumtemperatur erstarrt. Deshalb sind die für die Verarbeitung solcher Farben bekannten Farbwerke beheizt, um die Druckfarbe zu verflüssigen. Bei dem hier angesprochenen Farbtyp ist eine Erwärmung des Farbwerkes auf ca. 100° C ausreichend.

Obwohl mit derartigen Farbwerken konventionell die thermoplastische Druckfarbe direkt auf den Druckträger, vorzugsweise Papier, aber auch Kunststofffolien aufgebracht wird, kann das Konstruktionsprinzip bekannter Farbwerke auch für den vorliegenden Anwendungsfall übernommen werden. Es genügt daher hier eine zusammenfassende Beschreibung des Vorganges zum Auftragen der Druckfarbe. Wie in Fig. 1 angedeutet ist, wird der in das Farbwerk 7 einlaufende Farbstoffträger 1 mit seiner Schichtseite zunächst an eine erwärmte Heizrolle 8 angedrückt, deren Wärmekapazität ausreicht, um die dem Farbstoffträger 1 anhaftende Farbschicht einzuschmelzen. Anschließend wird über mehrere Walzen und Abstreifrakel die Farbschicht auf den bandförmigen Farbstoffträger neu aufgetragen.

Nach dem Verlassen des Farbwerkes 7 läuft der neu beschichtete Farbstoffträger 1 über die Umlaufrollen 2, 3 in die eigentliche Umdruckstation ein, kühlt auf dieser Strecke unter den Erstarrungspunkt ab und hat damit keinerlei Neigung bei bloßem Kontakt mit einem zu bedruckenden Medium dieses zu benetzen.

Das zu bedruckende Medium, der Druckträger 9 ist normalerweise Papier in Form von Einzelblättern oder Papierbahnen. In Fig. 1 ist schematisch angedeutet, daß der Druckträger 9 aus einer Eingabestation 10 entnommen wird und in Pfeilrichtung 11 in die Umdruckstation des Thermo-Transfer-Druckers eingeführt wird. Diese Umdruckstation enthält unter anderem eine Andruckrolle 12, die in Verbindung mit den Umlaufrollen 4 und 5 für den bandförmigen Farbstoffträger 1 im Bereich der Umdruckstation für einen direkten Kontakt der Schichtseite des bandförmigen Aufzeichnungsträgers 1 mit dem Druckträger 9 sorgt. Auf der Ausgabeseite der Umdruckstation schließlich ist eine Ablagestation 13 für den Druckträger 9 angeordnet, um den bedruckten Druckträger aufzunehmen. Die insoweit beschriebenen Module des Druckwerkes entsprechen durchaus konventionellen Einrichtungen bei Druckern, auch dann wenn sie nicht unbedingt in Verbindung mit Thermo-Transfer-Druckwerken bekannt sind. Eine ins einzelne gehende Beschreibung dieser Module erscheint daher im gegebenen Zusammenhang nicht erforderlich.

Dies gilt jedoch nicht für den Zeichengenerator 14, der in der Darstellung von Fig. 1 oberhalb der Andruckrolle 12 angeordnet ist und über ein Glasfaserbündel 15 die für den Druckvorgang notwendige Strahlungsenergie aus einer Strahlungsquelle 16 mit integriertem Reflektor erhält. Als Strahlungsquelle kommt beispielsweise eine handelsübliche Xenon-Kurzbogenlampe in Betracht, so wie sie z. B. von der Firma ILC Technology als sogenannte CERMAX (eingetragenes Warenzeichen)-Lampen angeboten werden.

Der Zeichengenerator 14 selbst besteht aus einem zweidimensionalen Feld von Schaltzellen, die es erlauben, punktweise Energie durch den transparenten Farbstoffträger 1 hindurch auf den Druckträger 9 zu fokussieren und dabei in diesen Brennpunkten lokal die auf den bandförmigen Farbstoffträger 1 aufgebrachte Farbschicht aufzuschmelzen. In diesem plastischen Zustand wird sie auf den Druckträger 9 übertragen und diffundiert je nach der Oberfläche des Druckträgers mehr oder minder in diese hinein. Damit ist der Umdruckvorgang beendet und der sich wiederholende Prozeß beginnt von neuem mit der Auffrischung des Farbstoffträgers 1 im Farbwerk 7.

Von entscheidender Bedeutung für dieses Umdruckverfahren ist neben dem verwendeten Typ einer thermoplastischen Druckfarbe ein geeigneter Zeichengenerator, der ohne Berührung des Farbstoffträgers 1 gleichzeitig mehrere 1000 Punkte anschmelzen kann, d. h. also genügend energetisch ist und trotzdem kurze Schaltzeiten ermöglicht.

Einzelelemente, d. h. einzelne Schaltzellen eines solchen Zeichengenerators 14 sind in verschiedenen Ausführungsformen in den Fig. 2 bis 4 dargestellt. All diesen Ausführungsformen ist gemeinsam, daß sie ein an sich aus der Optoelektronik bekanntes optisches Schaltelement 17 aufweisen. Dieses Schaltelement ist ein transparentes, ferroelektrisches Keramikplättchen, das aus mit Lanthan dotiertem Bleizirkonattitanat (Pb, Ld) (Zr, Ti) O$_3$ besteht und in der Optoelektronik auch als PLZT-Element bezeichnet wird. Für Anwendungen als Schaltelement wird ein solches Keramikplättchen mit transparenten Elektrodenflächen beidseitig beschichtet, so daß an diese Elektroden eine pulsförmige Spannung anlegbar ist, wie in Fig. 2 durch das Bezugszeichen 18 schematisch angedeutet ist.

Das genannte optische Schaltelement 17 dreht unter anderem die Polarisationsebene eines einfallenden Lichtstrahles und dieser Effekt wird in der Ausführungsform einer Schaltzelle benutzt, wie sie in Fig. 2 dargestellt ist. Mittels einer anhand von Fig. 1 bereits erläuterten Strahlungsquelle 16 wird in eine Glasfaser 19 von etwa 75 bis 300 µm Durchmesser die zum Schmelzen des Farbstoffes nötige Energie in die Schaltzelle eingekoppelt. Diese Strahlung wird mit einer ersten Gradientenfaser 20 von 1 bis 2 mm Durchmesser in ein paralleles Strahlenbündel mit vergrößertem Strahldurchmesser umgewandelt. In den Strahlengang ist ein Polarisator 21, daran anschließend das optische Schaltelement 17 und weiterhin ein Analysator 22 gestellt. In Strahlungsrichtung schließt sich eine zweite Gradientenfaser 23 an, deren Länge so abgestimmt ist, daß ein parallel einfallendes Strahlenbündel in einem vorgegebenen Abstand von der bildseitigen Stirnfläche dieser Faser fokussiert wird. Dieser Abstand kann z. B. 3 mm betragen und definiert eine Fokusebene, in der die zu schmelzende Farbschicht des bandförmigen Farbstoffträgers 1 liegt.

Gradientenfasern, wie sie hier zur Anwendung kommen, sind als sogenannte Selfoc (eingetragenes Warenzeichen) Mikrolinsen für mikrooptische Anwendungen bekannt. Im vorliegenden Fall ermöglicht die erste Gradientenfaser 20 die Umwandlung des über die Glasfaser 19 zugeführten engen Lichtbündels in ein paralleles Strahlenbündel mit vergrößertem Strahldurchmesser. Damit kann einerseits die Flußdichte durch den Polarisator 21, das optische Schaltelement 17 und den Analysator 22 im Verhältnis der Querschnittsfläche der Glasfaser 19 zu der der ersten Gradientenfaser 20 verringert werden. Dieses Aufspreizen des Strahlenbündels hat außerdem den Vorteil, daß sich bei gleichen absoluten Toleranzen Lageabweichungen der Zentralachse der beiden Gradientenfasern 20 bzw. 23 zueinander, absolut betrachtet, weniger stark auswirken, d. h. die Strahlung verlustarm in die zweite Gradientenfaser 23 eingekoppelt werden kann.

Die Funktionsweise dieser Schaltzelle beruht darauf, daß der Polarisator 21 eine bestimmte Polarisationsebene der in das optische Schaltelement 17 eintretenden Strahlung festlegt. Wird dann an dieses Element eine elektrische Spannung angelegt, dann bewirkt dies eine Drehung der Polarisationsebene des austretenden Strahlenbündels. Bei geeigneter Bemessung der Spannungsamplitude und einer dazu ausgewählten Lage der Polarisationsebene des Analysators 22 im Hinblick auf die des Polarisators 21 läßt sich so die aus dem Analysator 22 austretende Strahlungsenergie steuern. Ein optisches Schaltelement 17, bestehend aus der oben beschriebenen ferroelektrischen Keramik, hat den Vorteil, daß es nahezu trägheitslos, d. h. ohne einen Speichereffekt arbeitet. Es ist deshalb für einen pulsartigen Betrieb mit einer entsprechend hohen Pulsfrequenz geeignet. In der beschriebenen Anordnung besteht der wesentliche Vorteil der Schaltzelle von Fig. 2 in der relativ geringen Strahlungsdichte, der der Polarisator 21, das Schaltelement 17 und der Analysator 22 ausgesetzt sind. Ferner kann ein sehr guter Kontrast, definiert als das Verhältnis der abgegebenen Strahlungsenergie im eingeschalteten bzw. im ausgeschalteten Zustand, von mehr als 100 bei einem Übertragungsfaktor, d. h. dem Verhältnis von ausgekoppelter zu eingekoppelter Energie von etwa 0,2 erreicht werden.

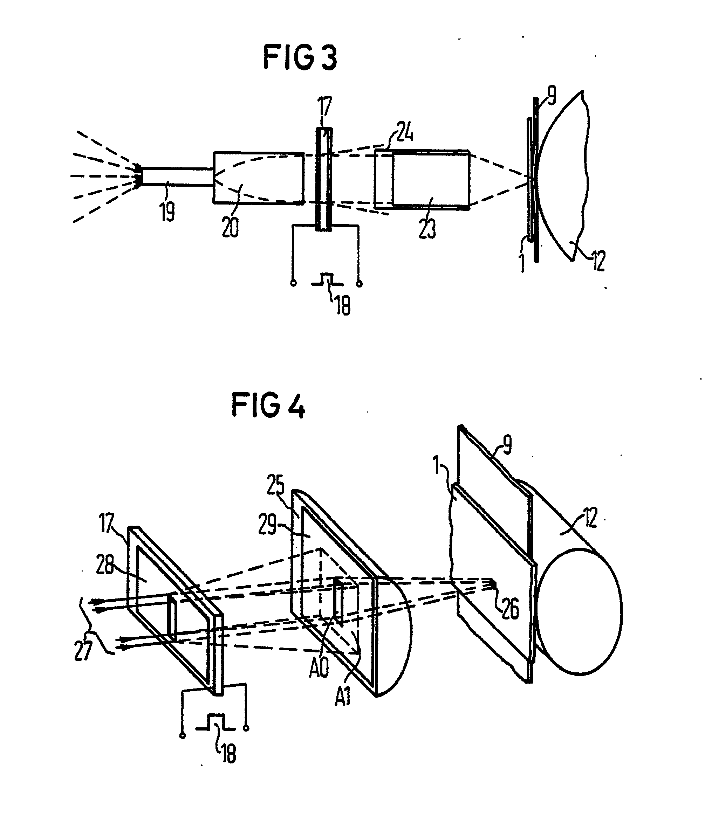

Eine weitere Ausführungsform für eine Schaltzelle mit einem optischen Schaltelement 17 der beschriebenen Art ist in Fig. 3 dargestellt. Im Gegensatz zu der oben beschriebenen Ausführungsform enthält diese Schaltzelle keine Elemente zum Bewerten der Drehung der Polarisationsebene des Strahlenbündels, kommt also ohne Polarisator bzw. Analysator aus. Dies beruht darauf, daß bei dieser Ausführungsform ein weiterer Effekt der PLZT-Keramik, nämlich der sogenannte Streueffekt ausgenutzt wird. Darunter versteht man die Eigenschaft dieser Keramik, ein paralleles Strahlenbündel beim Durchgang durch diese Keramik in einen divergenten Strahl mit einem Gesamtöffnungswinkel von ca. 6° zu verwandeln, sofern an die transparenten Elektroden der Keramik, wie in Fig. 3 schematisch dargestellt, eine Spannung I8 angelegt wird. Die in der Praxis erreichbaren Kontrastwerte liegen zwischen 10 und 50 und können bei hoher Packungsdichte der einzelnen Schaltzellen durch rohrförmige Aperturblenden 24 günstig beeinflußt werden. Besonders vorteilhaft ist bei dieser Lösung, daß mit diesem Aufbau ein hoher Übertragungsfaktor von etwa 0,6 erreichbar ist, was diese Ausführungsform insbesondere für Anwendungen mit hoher Bestrahlungsdichte interessant erscheinen läßt.

Ebenfalls auf der Ausnutzung des Streueffektes der PLZT-Keramik beruht die in Fig. 4 dargestellte Ausführungsform einer Schaltzelle, mit der es möglich ist, eine noch höhere Energiemenge auf einen Bildpunkt 26 zu konzentrieren, ohne daß dabei die Strahlungsdichte am aktiven optischen Schaltelement 17 erhöht werden muß. Bei konstanter Flächenbelastung läßt sich eine höhere Energiemenge nur dann durch das optische Schaltelement 17 schicken, wenn man die Durchtrittsfläche des Strahlenbündels vergrößert. Dies wird dadurch erreicht, daß man die von einer - in Fig. 4 nicht dargestellten - Strahlungsquelle ausgehende Strahlung in ein paralleles Strahlenbündel mit einem verhältnismäßig großen Querschnitt umwandelt.

In der in Fig. 4 dargestellten Ausführungsform ist das einfallende Strahlungsbündel 27 in der vertikalen Richtung gegenüber der horizontalen Richtung um ein vielfaches vergrößert. In der technischen Optik läßt sich unter Beachtung der geometrischen Bedingungen für die Ausbreitung einer Strahlung ein derartig entartetes Strahlungsbündel mit rechteckigem Querschnitt bekanntlich durch Schlitzmasken erzielen. Eine erste solche Schlitzmaske 28 ist in der Ausführungsform von Fig. 4 angedeutet, sie ist vor bzw. auf der Oberfläche des optischen Schaltelementes 17 angeordnet, die der Einfallsrichtung des Strahlenbündels zugewandt ist.

Zwischen dem optischen Schaltelement 17 und dem Bildpunkt 26 ist im Strahlengang eine Zylinderlinse 25 angeordnet, die das vertikal auseinandergezogene Lichtbündel auf den Bildpunkt 26 fokussiert. Auch der Zylinderlinse 25 ist auf ihrer Eintrittsseite der Strahlung eine weitere Schlitzmaske 29 zugeordnet. Die Durchtrittsfläche dieser zweiten Schlitzmaske ist theoretisch identisch mit der entsprechenden Durchtrittsfläche der ersten Schlitzmaske 28, in der Praxis wird sie aus Toleranzgründen jedoch etwas größer bemessen sein.

Die Durchtrittsfläche der zweiten Schlitzmaske 29 ist in der Zeichnung mit A1 bezeichnet, sie kennzeichnet zugleich die Querschnittsfläche des nicht gestreuten Strahlungsbündels 27, wenn es auf die Frontfläche der Zylinderlinse 25 auftrifft. Dieser Zustand tritt auf, solange das optische Schaltelement 17 spannungslos ist. Wird dagegen an die transparenten Elektroden des optischen Schaltelementes 17 eine Spannung 18 angelegt, dann wird das Strahlungsbündel 27 gestreut, so daß eine Querschnittsfläche A0 das gestreute Strahlungsbündel an der Zylinderlinse eine Querschnittsfläche A0 aufweist. Die Bestrahlungsstärke ändert sich demnach im Verhältnis der beiden Flächen A1 bzw. A0. Unter Ausnutzung des Streueffektes des optischen Schaltelementes 17 ist also im ausgesteuerten Zustand dieses Schaltelementes die durch die Querschnittsfläche der zweiten Schlitzmaske 29 durchtretende Energie wesentlich geringer als im inaktiven Zustand des Schaltelementes 17. Diese in den Bildpunkt 26 fokussierte Energie reicht nicht aus, um die im Bildpunkt auf den Farbstoffträger 1 haftende Farbschicht lokal anzuschmelzen. Tritt dagegen das Strahlungsbündel 27 ungestört durch das optische Schaltelement 17, dann erhöht sich die durchtretende Energie im Verhältnis der beiden Flächen A0 bzw. A1. Damit wird im Bildpunkt 26 eine Energiemenge konzentriert, die die auf dem Farbstoffträger 1 haftende Farbschicht lokal zum Schmelzen bringt, so daß ein Umdruck auf den Druckträger 9 stattfindet.

Bei dieser zuletzt anhand von Fig. 4 beschriebenen Ausführungsform einer Schaltzelle kann also die Strahlungsdichte des einfallenden parallelen Strahlenbündels 27 relativ gering sein, da durch die Fokussierung der am optischen Schaltelement 17 vertikal verteilten Energie mittels der Zylinderlinse 25 auf den Bildpunkt 26 in diesem Punkt eine ausreichende Energiemenge auftritt. Dabei soll nicht übersehen werden, daß die Schlitzblende 29 für die Funktion der Schaltzelle nicht zwingend erforderlich ist, wie sich aus den Regeln der geomentrischen Optik ohne weiteres ergibt. Die Schlitzblende 29 dient vor allem der Kontrastverbesserung, da sie Streulicht ausblendet, das sonst auf benachbarte, weiteren Schaltzellen zugeordnete Bildpunkte fiele.

Ein Vergleich der vorstehenden detaillierten Beschreibungen der einzelnen Ausführungsformen von Schaltzellen läßt offenbar werden, daß diese unterschiedlichen Möglichkeiten anwendungsspezifische Gestaltung ermöglichen, die für einen einzelnen Fall die gewählte Lösung hinsichtlich der gewünschten Charakteristiken eines Thermo-Transfer-Druckwerkes z. B. im Hinblick auf die Druckleistung und/oder die Bildpunktgröße optimiert.

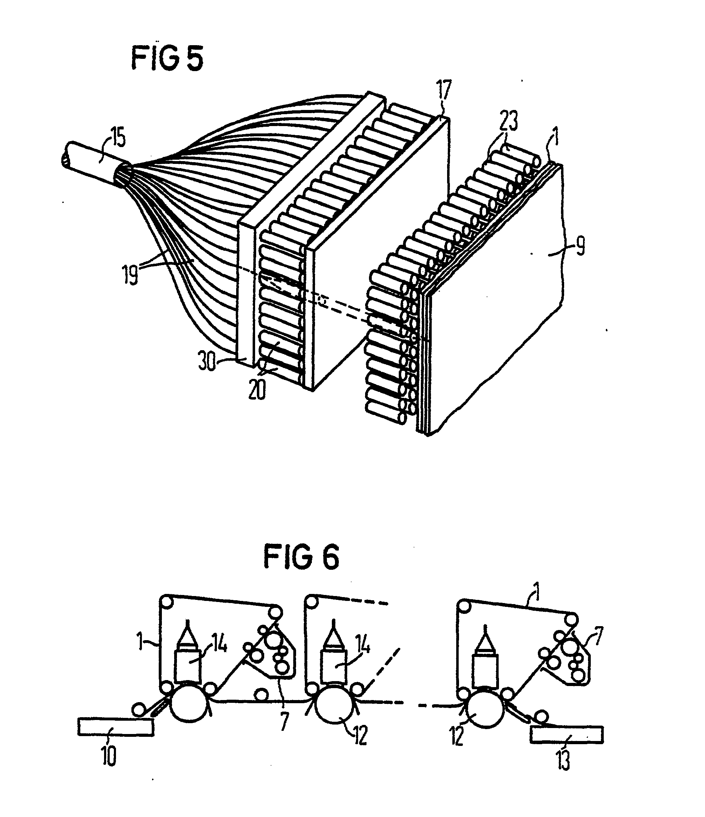

In Fig. 5 ist nun schematisch ein Modul eines Zeichengenerators dargestellt, der in einer zweidimensionalen Verteilung eine Vielzahl von Schaltzellen umfaßt. In dieser beispielhaften Darstellung sind Schaltzellen der anhand von Fig. 3 beschriebenen Ausführungsform verwendet. Es ist ein Bündel Glasfaser 15 mit einzelnen Glasfasern 19 angedeutet, die auf einer Positionierplatte 30 für die Glasfasern enden. Wie in Fig. 3 sind wieder die ersten Gradientenfasern 20 der einzelnen Schaltzellen zu erkennen, die als Kollimatorlinsen wirken. Dahinter ist ein PLZT-Keramiksubstrat angeordnet, das in einer konventionellen Technik in einer Feinstruktur die lokalen optischen Schaltelemente 17 in sich vereinigt. Auf der Ausgangsseite ist ein dem Feld von ersten Gradientenfasern 20 zugeordnetes Feld von zweiten Gradientenfasern 23 koaxial zugeordnet, die die Strahlenbündel der einzelnen Schaltzellen jeweils auf Bildpunkte fokussieren, in denen die lokal aufgeschmolzene Farbschicht von dem bandförmigen Farbstoffträger 1 auf den Druckträger 9 übertragen wird.

Geht man davon aus, daß ein mit einem solchen Zeichengenerator arbeitendes Thermo-Transfer-Druckwerk für zeilenweisen Druck ausgelegt ist, dann würden in Zeilenrichtung eine Mehrzahl solcher Zeichengeneratormodulen von der in Fig. 5 dargestellten Art nebeneinander angeordnet.

Selbstverständlich ist für einen derartigen Zeichengenerator auch eine entsprechende elektronische Steuereinheit notwendig, die es gestattet, parallel, d. h. also gleichzeitig wie Vielzahl der optischen Schaltelemente 17 anzusteuern, d. h. individuell in Abhängigkeit von einer zugeführten Druckinformation inaktiv zu halten bzw. zu aktivieren. Eine derartige Steuereinrichtung könnte völlig analog zu vergleichbaren Steuereinrichtungen aufgebaut werden, wie sie z. B. für bekannte nicht mechanische Drucker zur Drucksteuerung benötigt werden. Eine solche Steuereinheit ist jedoch nicht Gegenstand der Erfindung, so daß es nicht notwendig erscheint, eine derartige Steuereinrichtung hier im einzelnen z. B. in Verbindung mit einem Zeichengeneratormodul, wie er in Fig. 5 dargestellt ist, zu beschreiben.

Die vorstehende Beschreibung bezieht sich auf ein monochromes Thermo-Transfer-Druckwerk, denn es ist davon ausgegangen, daß der bandförmige Farbstoffträger 1 ganzflächig auf der dem Druckträger 9 zugewandten Oberfläche mit einer einfarbigen Farbschicht beschichtet ist. In Fig. 6 ist schematisch angedeutet, daß mehrere der anhand von Fig. 1 näher erläuterter Druckwerke in bezug auf den Druckträger 9 hintereinander geschaltet werden können. Jedes dieser Druckwerke verarbeitet eine von mehreren Grundfarben einer Druckfarbe. Da sich ein monochromes Druckwerk basierend auf dem erläuterten Prinzip eines Thermo-Transfer-Druckes, auch bei hoher Druckleistung relativ kompakt aufbauen läßt, wird eine solche Hintereinanderschaltung mehrerer Druckwerke für polychromen Druck durchaus möglich, ohne daß ein derartiges Aufbauprinzip deswegen zu einer unverhältnismäßig voluminösen Druckeinrichtung führt. Es kann dabei dem einzelnen Anwendungsfall überlassen bleiben, ob für einen polychromen Drukker ein Drei- oder Vierfarbendruckprinzip zugrundegelegt werden soll. Eine ins einzeln gehende Beschreibung der in Fig. 6 dargestellten Druckeinrichtung erscheint hier nicht mehr notwendig.

**Patentansprüche**

1. Thermo-Transfer-Druckeinrichtung mit einem Druckkopf, der eine Vielzahl von in einem zweidimensionalen Feld angeordneten und durch die Druckinformation gesteuerten Schaltzellen (20, 17, 23) aufweist, über die die von einer Energiequelle abgegebene Energie parallel auf in einem Raster angeordnete Bildpunkte übertragen wird, die in der Ebene einer Farbstoffschicht eines bandförmigen Farbstoffträgers (1) liegen, so daß bei ausreichend hoher lokaler Energieaufnahme der Farbstoff auf einen unter Druck anliegenden Druckträger (9) übertragen wird, dadurch gekennzeichnet, daß der mit einer thermoplastischen Druckfarbe beschichtete Farbstoffträger (1) als umlaufendes endloses Band ausgebildet ist, das zum Regenerieren der Farbstoffschicht ein beheiztes Farbwerk (7) durchläuft, und daß der Druckkopf in Verbindung mit einer energiereichen Strahlungsquelle (l6) als optischer Zeichengenerator (14) ausgebildet ist, in dem jede Schaltzelle (z. B. 20, 17, 23) ein optisches Schaltelement (17), bestehend aus einem ferroelektrischen Keramiksubstrat auf der Basis eines mit Lanthan dotierten Bleizirkonattitanats und einem transparenten Elektrodenpaar zum Anlegen einer pulsförmigen Steuerspannung (18) sowie einem ersten optischen Element (20 bzw. 28) und einem zweiten optischen Element (23, bzw. 25), aufweist, wobei das erste optische Element (20 bzw. 28), im Strahlengang vor dem optischen Schaltelement (17) liegend, einen Teil der von der Strahlungsquelle (16) abgegebenen Energie als paralleles, aufgeweitetes Strahlenbündel in das Schaltelement einkoppelt und das zweite optische Element (23 bzw. 25) im Strahlengang hinter dem optischen Schaltelement und mit einem vorbestimmten Abstand zum Farbstoffträger (1) derart angeordnet ist, daß es den aufgenommenen Teil des Strahlungsbündels im zugeordneten Bildpunkt fokussiert.

2. Thermo-Transfer-Druckeinrichtung nach Anspruch 1, dadurch gekennzeichnet, daß eine erste Gradientenfaser (20) das erste optische Element bildet, die als Kollimatorlinse wirkend, das von der Strahlungsquelle (16) empfangene Strahlenbündel aufweitet und als paralleles Strahlenbündel abgibt und daß als zweites optisches Element eine zweite Gradientenfaser (23) im Strahlengang hinter dem optischen Schaltelement (l7) so angeordnet und in ihrer Länge bemessen ist, daß der Fokus dieses Abbildungselementes in dem zugeordneten Bildpunkt auf der Schichtseite des Farbstoffträgers (1) liegt.

3. Thermo-Transfer-Druckeinrichtung nach Anspruch 2, dadurch gekennzeichnet, daß in den Schaltzellen (z. B. 20, 17, 23) im Strahlengang vor dem optischen Schaltelement (17) ein Polarisator (21) angeordnet ist, der ein paralleles Strahlenbündel mit vorbestimmter Polarisationsebene abgibt und im Strahlengang hinter dem optischen Schaltelement ein Analysator (22) angeordnet ist, dessen Polarisationsebene gegenüber der des Polarisators um einen Winkel gedreht ist, der mit dem Drehwinkel der Polarisation beim Durchtritt des Strahlenbündels durch das optische Schaltelement übereinstimmt, sofern dies durch eine pulsförmige Spannung (18) vorgegebener Amplitude aktiviert ist.

4. Thermo-Transfer-Druckeinrichtung nach Anspruch 2, dadurch gekennzeichnet, daß in den Schaltzellen (z. B. 20, 17, 23) ein im angesteuerten Zustand auftretender Streueffekt des optischen Schaltelementes (17) ausgenutzt wird und der Abstand der zweiten Gradientenfaser (23) zum optischen Schaltelement groß gegenüber dem entsprechenden Abstand der ersten Gradientenfasser (20) ist.

5. Thermo-Transfer-Druckeinrichtung nach Anspruch 4, dadurch gekennzeichnet, daß der zweiten Gradientenfaser (23) eine tubusförmige Aperturblende (24) zum Ausblenden unerwünschter Streustrahlung zugeordnet ist.

6. Thermo-Transfer-Druckeinrichtung nach einem der Ansprüche 2 bis 5, dadurch gekennzeichnet, daß jeder Schaltzelle (z. B. 20, 17, 23) eine Glasfaser (19) zugeord net ist, über die von der Strahlungsquelle (16) abgegebene Teilstrahlung über die Eintrittsfläche der ersten Gradientenfaser (20) in die Schaltzelle eingekoppelt wird und deren Durchmesser klein gegenüber dem der ersten Gradientenfaser ist.

7. Thermo-Transfer-Druckeinrichtung nach Anspruch 6, dadurch gekennzeichnet, daß der Durchmesser der Glasfaser (19) im Verhältnis zu dem der ersten Gradientenfaser (20) um wenigstens eine Größenordnung kleiner ist.

8. Thermo-Transfer-Druckeinrichtung nach Anspruch I mit Schaltzellen, bei denen ein optischer Streueffekt des optischen Schaltelementes ausgenutzt wird, dadurch gekennzeichnet, daß das erste optische Element als Schlitzblende (28), die ein paralleles Strahlenbündel (27) rechteckigen Querschnitts in das Schaltelement (17) einkoppelt und das zweite optische Element als Zylinderlinse (25) ausgebildet ist.

9. Thermo-Transfer-Druckeinrichtung nach Anspruch 8, dadurch gekennzeichnet, daß der Strahlungseintrittsfläche der Zylinderlinse (25) zugeordnet, eine weitere Schlitzblende (29) vorgesehen ist, die im Strahlengang auf die erste Schlitzblende (28) lagegetreu ausgerichtet ist und einen Streuanteil der vom Schaltelement (17) abgegebenen Strahlung ausblendet.

10. Thermo-Transfer-Druckeinrichtung nach einem der Ansprüche 1 bis 9, dadurch gekennzeichnet, daß zum individuellen Einkoppeln der von der Strahlungsquelle (l6) abgegebenen gebündelten Strahlungsenergie in die Schaltzellen (z. B. 20, 17, 23) des Zeichengenerators ein Glasfaserbündel (15) vorgesehen ist, dessen einzelne Glasfasern (19) jeweils einer Schaltzelle zugeordnet sind, wobei die den Schaltzellen zugekehrten Endflächen dieser Glasfasern auf einer transparenten Positionierplatte (30) festgelegt sind, gegenüber der ein zweidimensionales Feld von Schaltzellen bezüglich der Strahlengänge der einzelnen Strahlenbündel koaxial ausgerichtet ist.

11. Thermo-Transfer-Druckeinrichtung für zeilenweisen Druck nach Anspruch 10, dadurch gekennzeichnet, daß der Zeichengenerator (l4) modular aufgebaut ist, wobei jeweils ein zweidimensionales Feld von Schaltzellen (z. B. 20, 17, 23) einen Zeichengeneratormodul bildet, der eine Mehrzahl von zeilenweise angeordneten Schaltzellen aufweist und daß eine Mehrzahl derartiger Zeichengeneratormodule in Richtung einer Druckzeile nebeneinander angeordnet ist.

12. Thermo-Transfer-Druckeinrichtung nach einem der Ansprüche 1 bis 11, dadurch gekennzeichnet, daß zwischen zwei den als Endlosband ausgebildeten Farbstoffträger (1) kontinuierlich transportierenden Umlaufrollen (4, 5) im Bereich der vom Zeichengenerator (14) erzeugten Bildpunktebene eine Andruckrolle (12) vorgesehen ist, über die der Druckträger (9) läuft und die diesen an die Farbschichtseite des Farbstoffträgers andrückt.

13. Thermo-Transfer-Druckeinrichtung nach Anspruch l2, dadurch gekennzeichnet, daß in Umlaufrichtung des Farbstoffträgers (1) gesehen, das Farbwerk (7) hinter der Andruckrolle (12) angeordnet ist und eine Heizeinrichtung (8) aufweist, die die Farbschicht des Farbstoffträgers beim Einlaufen in das Farbwerk zum Schmelzen bringt, so daß im Farbwerk die Farbstoffschicht kontinuierlich und vollständig regeneriert wird und daß zwischen dem Farbwerk und der vom Zeichengenerator (14) und der Andruckrolle (12) gebildeten Umdruckstation eine Abkühlstrecke vorgesehen ist, so daß der Farbstoffträger mit erstarrter und damit wischfester Farbschichtseite in diese Umdruckstation einläuft.

14. Thermo-Transfer-Druckeinrichtung nach Anspruch 13, dadurch gekennzeichnet, daß zum polychromen Druck in bezug auf eine Transportbahn des Druckträgers (9), die eine Eingabestation (10) des Druckträgers mit einer Ausgabestation (13) verbindet, mehrere Druckwerke, jeweils einen Zeichengenerator (14), eine Umlaufstrecke (2, 3, 4, 5, 12) mit dem kontinuierlich umlaufenden Farbstoffträger (1) und ein Farbwerk (7) enthaltend, in Serie angeordnet sind, wobei die Farbstoffträger (1) jeweils mit einer Grundfarbe für den Mehrfarbendruck beschichtbar sind.

## Claims

1.Thermo-transfer printer comprising a print head which exhibits a plurality of switching cells (20, 17, 23) arranged in a two-dimensional array and controlled by the printing information, via which the energy delivered by an energy source is transferred in parallel to picture dots, arranged in a screen, which are located in the plane of an ink layer of a ribbon-shaped ink carrier (1) so that, when sufficiently high local energy is absorbed, the ink is transferred to a print carrier (9) which is in contact under pressure, characterized in that the ink carrier (1) coated with a thermoplastic printing ink is constructed as a circulating endless ribbon which passes through a heated inking mechanism (7) for regenerating the ink layer, and that the print head, in conjunction with a high-energy radiation source (16), is constructed as an optical character generator (14) in which each switching cell (for example 20, 17, 23) exhibits an optical switching element (17) consisting of a ferroelectrical ceramic substrate based on a lead zirconate titanate doped with lanthanum and a transparent electrode pair for applying a pulse-shaped control voltage (18), a first optical element (20 and 28, respectively) and a second optical element (23 and 25, respectively), the first optical element (20 and 28, respectively), located in front of the optical switching element (17) in the beam path, coupling the part of the energy delivered by the radiation source (16) into the switching element as a parallel widened beam and the second optical element (23 and 25, respectively) being arranged behind the optical switching element in the beam path and at a predetermined distance from the ink carrier (1) in such a manner that it focuses the received part of the beam at the associated picture dot.

2. Thermo-transfer printer according to claim 1, characterized in that a first gradient fibre (20) forms the first optical element which, acting as a collimator lens, widens the beam received from the radiation source (16) and delivers it as a parallel beam and in that a second gradient fibre (23) is arranged, and dimensioned in its length, as a second optical element in the beam path behind the optical switching element (17) in such a manner that the focus of this imaging element is located at the associated picture dot on the layer side of the ink carrier (1).

3. Thermo-transfer printer according to claim 2, characterized in that in the switching cells (for example 20,17, 23) in front of the optical switching element (17) in the beam path a polarizer (21) is arranged which delivers a parallel beam with a predetermined plane of polarization and behind the optical switching element in the beam path an analyser (22) is arranged, the plane of polarization of which is rotated, compared with that of the polarizer, by an angle which corresponds to the angle of rotation of the polarization when the beam passes through the optical switching element if the latter is activated by a pulse-shaped voltage (18) of predetermined amplitude.

4. Thermo-transfer printer according to claim 2, characterized in that in the switching cells (for example 20, 17, 23), a scattering effect, occurring in the activated state, of the optical switching element (17) is utilized and the distance between the second gradient fibre (23) and the optical switching element is great compared with the corresponding distance of the first gradient fibre (20).

5. Thermo-transfer printer according to claim 4, characterized in that the second gradient fibre (23) is associated with a barrel-shaped aperture diaphragm (24) for stopping down unwanted scattered radiation.

6. Thermo-transfer printer according to one of claims 2 to 5, characterized in that each switching cell (for example 20,17, 23) is associated with a glass fibre (19) via which the part radiation delivered by the radiation source (16) is coupled into the switching cell via the entry face of the first gradient fibre (20) and the diameter of which is small compared with that of the first gradient fibre.

7. Thermo-transfer printer according to claim 6, characterized in that the diameter of the glass fibre (19) is smaller by at least one order of magnitude in relation to that of the first gradient fibre (20).

8. Thermo-transfer printer according to claim 1 comprising switching cells in which an optical scattering effect of the optical switching element is utilized, characterized in that the first optical element is constructed as a slotted diaphragm (28) which couples a parallel beam (27) of rectangular cross-section into the switching element (17) and the second optical element is constructed as a cylindrical lens (25).

9. Thermo-transfer printer according to claim 8, characterized in that, associated with the radiation entry face of the cylindrical lens (25), a further slotted diaphragm (29) is provided which is aligned positionally conformally with the first slotted diaphragm (28) in the beam path and stops down a scattered component of the radiation delivered by the switching element (17).

10. Thermo-transfer printer according to one of claims 1 to 9, characterized in that for individually coupling-in the focused radiation energy delivered by the radiation source (16) into the switching cells (for example 20, 17, 23) of the character generator, a glass fibre bundle (15) is provided the individual glass fibres (19) of which are in each case associated with one switching cell, the end faces of these glass fibres facing the switching cells being fixed in position on a transparent positioning plate (30), opposite to which a two-dimensional array of switching cells is aligned coaxially with respect to the beam path of the individual beams.

11. Thermo-transfer printer for line-by-line printing according to claim 10, characterized in that the character generator (14) is of modular construction, one twodimensional array of switching cells (for example 20, 17, 23) in each case forming one character generator module which exhibits a plurality of switching cells arranged line by line and in that a plurality of such character generator modules is arranged adjacently to one another in the direction of one line to be printed.

12. Thermo-transfer printer according to one of claims 1 to 11, characterized in that between two circulating rollers (4, 5) continuously transporting the ink carrier (1) constructed as an endless ribbon, a pressure roller (12), via which the print carrier (9) runs and which presses the latter against the ink-layer side of the ink carrier, is provided in the area of the picture dot plane generated by the character generator (14).

13. Thermo-transfer printer according to claim 12, characterized in that, seen in the direction of circulation of the ink carrier (1), the inking mechanism, (7) is arranged behind the pressure roller (12) and exhibits a heating device (8) which causes the ink layer of the ink carrier to melt when it runs into the inking mechanism, so that the ink layer is continuously and completely regenerated in the inking mechanism, and in that between the inking mechanism and the transfer station formed by the character generator (14) and the pressure roller (12), a cooling distance is provided so that the ink carrier enters this transfer station with solidifed and thus smudge-proof ink-layer side.

14. Thermo-transfer printer according to claim 13, characterized in that, for the purpose of polychrome printing, several printing mechanisms, in each case one character generator (14), a circulating distance (2, 3, 4, 5, 12) with the continuously circulating ink carrier (1) and containing an inking mechanism (7) are arranged in series with respect to a feed path of the print carrier (9) which connects an input station (10) of the print carrier with an output station (13), in which arrangement the ink carriers (1) can be coated in each case with a basic ink for the multi-colour print.

## Revendications

1. Imprimante à transfert thermique, avec une tête d'impression qui comporte une multiplicité de cellules de commutation (20, 17, 23) disposées dans un champ bidimensionnel, commandées par l'information d'impression et par l'intermédiaire desquelles l'énergie fournie par une source d'énergie est transmise en parallèle à des points d'image disposés suivant une trame et qui se situent dans le plan d'une couche de substance colorante d'un support de substance colorante (1) en forme de bande, en sorte que, dans le cas d'une absorption locale d'énergie suffisamment élevée, la substance colorante est transférée sur un support d'impression (9) soumis à pression, caractérisée par le fait que le support de substance colorante (1) revêtu d'un colorant d'impression thermoplastique est réalisé sous la forme d'une bande sans fin qui passe dans un mécanisme encreur (7) en vue de régénérer la couche de substance colorante, et que la tête d'impression, en liaison avec une source de rayonnement riche en énergie (16), est réalisée sous la forme d'un générateur optique de signes (14) dans lequel chaque cellule de commutation (par exemple 20, 17, 23) comporte un élément optique de commutation (17), constitué par un substrat céramique ferroélectrique à base d'un titanate de zirconate de plomb dopé au lathane et par une paire d'électrodes transparentes pour l'application d'une tension de commande impulsionnelle (18), ainsi que par un premier élément optique (20; 28) et par un second élément optique (23; 25), la réalisation étant telle que le premier élément optique (20; 28) qui se situe l'avant de l'élément optique de commutation (17) envoi à ce dernier, sous la forme d'un faisceau de rayons parallèles étalé, une partie de l'énergie émise par la source de rayonnement (16), alors que le second élément optique (23; 25) est disposé dans la trajectoire de rayonnement derrière l'élément optique de commutation et à une distance prédéterminée du support de substance colorante (1), qui est telle qu'il focalise ou concentre au point d'image associé la partie reçue du faisceau de rayons.

2. Imprimante à transfert thermique, selon la revendication 1, caractérisée par le fait que le premier élément optique est forme par une première fibre à gradient d'indice (20) qui, agissant comme une lentille colimatrice qui élargie ou étale le faisceau de rayon reçu de la source de rayonnement (16) et l'émet sous la forme d'un faisceau de rayon parallèle, et, qu'en tant que second élément optique, une seconde fibre à gradient (23) est disposé de telle manière derrière l'élément optique de commutation (16) dans la trajectoire du rayonnement et sa longueur est telle que le foyer de cet élément de reproduction se situe au point image associé sur le côté ou sur la face revêtue du support de substance colorante (1).

3. Imprimante à transfert thermique, selon la revendication 2, caractérisée par le fait que dans les cellules de commutation (par exemple 20, 17, 23), est disposée, dans la trajectoire du rayonnement et à l'avant de l'élément optique de commutation (17), un polariseur (21) qui émet un faisceau de rayon parallèle à plan de polarisation prédéterminée, et que dans la trajectoire du rayonnement et à l'arrière de l'élément optique de commutation, est disposé un analyseur (22) dont le plan de polarisation est décalé par rapport au plan de polarisation du polariseur d'un angle qui coïncide avec l'angle de rotation de la polarisation au passage du faisceau de rayon à travers l'élément optique de commutation, dans la mesure où celui-ci est activé par une tension impulsionnelle (28) ayant une amplitude prédéterminée.

4. Imprimante à transfert thermique selon la revendication 2, caractérisé par le fait que dans les cellules de commutation (par exemple 20, 17, 23) on met à profit un effet de dispersion de l'élément optique de commutation (17) et que la distance de la seconde fibre à gradient (23) à l'élément optique de commutation est importante comparativement à la distance correspondante de la première fibre à gradient (20).

5. Imprimante à transfert thermique selon la revendication 4, caractérisée par le fait qu'à la seconde fibre à gradient (23) est associé un diaphragme d'ouverture de forme tubulaire (24) en vue de supprimer un rayonnement de dispersion non souhaité.

6. Imprimante à transfert thermique selon l'une des revendications 2 à 5, caractérisée par le fait qu'à chaque cellules de commutation (par exemple 20, 17, 23) est associée une fibre optique (19) par l'intermédiaire de laquelle le rayonnement partiel qui est émis par la source de rayonnement (16), est introduit, par la surface d'entrée de la première fibre à gradient (20), dans la cellule de commutation, et dont le diamètre est inférieur à celui de la première fibre à gradient.

7. Imprimante à transfert thermique selon la revendication 6, caractérisée par le fait que le diamètre de la fibre optique (19) est inférieur d'au moins un ordre de grandeur, comparativement au diamètre de la première fibre à gradient (20).

8. Imprimante à transfert thermique selon la revendication 1, comportant des cellules de commutation dans lesquelles on met à profit un effet optique de dispersion de l'élément de commutation optique, caractérisé par le fait que le premier élément optique est réalisé sous la forme d'un diaphragme à fente (28) qui envoi à l'élément de commutation (17) un faisceau de rayons parallèles (27) de section transversale rectangulaire, et que le second élément optique est réalisé sous la forme d'une lentille cylindrique (25).

9. Imprimante à transfert thermique selon la revendication 8, caractérisé par le fait qu'à la surface d'entrée du rayonnement de la lentille cylindrique (25) est associé un second diaphragme à fente (29) qui est aligné en position correcte dans la trajectoire des rayons par rapport au premier diaphragme à fente (28), et qui supprime une partie de la dispersion du rayonnement qui est émis par l'élément de commutation (17).

10. Imprimante à transfert thermique selon l'une des revendications 1 à 9, caractérisée par le fait que pour l'introduction individuelle de l'énergie de rayonnement focalisée qui est fournie par la source de rayonnement (16), dans les cellules de commutation (par exemple 20, 17, 23) du générateur de signes (14), il est prévu un faisceau de fibres optiques ou fibres de verre (15) dont les fibres de verre individuelles (19) sont chacune associées à une cellule de commutation, les surfaces d'extrémité des fibres de verre qui sont tournées en direction des cellules de commutation, étant fixées sur une plaque de positionnement transparente (30), en face de laquelle est dressée un champs bidimentionnel de cellules de commutation, coaxialement par rapport aux trajectoires de rayonnement des faisceaux de rayons individuels.

11. Imprimante à transfert thermique pour l'impression ligne par ligne, selon la revendication 10, caractérisée par le fait que le générateur de signes (14) est constitué de façon modulaire, étant noté qu'un champ bidimensionnel de cellules de commutation (par exemple 20, 17, 23) forme un module de générateurs de signes, qui comporte une pluralité de cellules de commutation disposées ligne par ligne, et que plusieurs modules de générateurs de signes de ce genre sont disposés, côte à côte, en direction d'une ligne d'impression.

12. Imprimante à transfert thermique selon l'une des revendications 1 à 11, caractérisée par le fait qu'entre deux rouleaux (4, 5) qui transportent de façon continue le support de substance colorante (1) qui est réalisé sous la forme d'une bande sans fin, il est prévu, dans la zone du plan de points d'images produits par le générateur de signes (14), un rouleau de pression (12) sur lequel passe le support d'impression (9) et qui applique ce dernier contre le côté enduit du support de substance colorante.

13. Imprimante à transfert thermique selon la revendication 12, caractérisée par le fait que dans le sens de passage du support de substance colorante (1), le mécanisme encreur (7) est disposé derrière le rouleau de pression (12) et comporte un dispositif de chauffage (8) qui amène à fusion la couche colorante du support de couche colorante lors de l'entrée dans le mécanisme encreur, en sorte que dans ce dernier la couche de substance colorante est continuellement et complètement régénérée, et qu'entre le mécanisme encreur, d'une part, et le poste de transfert qui est formé par le générateur de signes (14) et le rouleau de pression (12), d'autre part, est prévue une voie de refroidissement, si bien que le support de substance colorante pénètre dans ce poste de transfert avec sa face enduite de substance colorante qui est solidifiée et résistante à l'étalement.

14. Imprimante à transfert thermique selon la revendication 13, caractérisée par le fait que pour une impression polychrome, et par rapport à une trajectoire de transport du support d'impression (9) qui relie un poste d'introduction (10) du support d'impression à un poste de sortie (13), plusieurs mécanismes encreurs sont disposés en série, chacun d'eux comportant un générateur de signes (14), une voie de passage (2, 3, 4, 5, 12) avec le support de substance colorante (1) en déplacement continu, ainsi qu'un mécanisme encreur (16), chacun des supports de substance colorante (1) étant susceptible d'être enduit avec une couleur fondamentale, pour l'impression polychrome.

FIG 1

FIG 2

# FIG 3

# FIG 4

FIG 5

FIG 6